# EUROPÄISCHE PATENTSCHRIFT

(11) **EP 4 175 833 B1**
(45) Veröffentlichungstag und Bekanntmachung des Hinweises auf die Patenterteilung: **15.01.2025**
(21) Anmeldenummer: 21743507.2
(22) Anmeldetag: 15.07.2021
(51) Int. Cl.: B41M 3/14, B41M 1/10, B41F 9/10, B42D 25/29, B42D 25/378, C09D 11/037, C09D 11/50

(54) **VERFAHREN UND VORRICHTUNG ZUM BEDRUCKEN EINES SUBSTRATS MIT EINER ELEKTROLUMINESZENTEN DRUCKFARBE SOWIE AUSWEIS-, WERT- ODER SICHERHEITSDOKUMENTS UMFASSEND EIN SOLCHES SUBSTRAT**
METHOD AND DEVICE FOR PRINTING A SUBSTRATE WITH AN ELECTROLUMINESCENT PRINTING INK, AND IDENTITY, VALUE OR SECURITY DOCUMENT COMPRISING A SUBSTRATE OF THIS TYPE
PROCÉDÉ ET DISPOSITIF D'IMPRESSION D'UN SUBSTRAT AVEC UNE ENCRE D'IMPRESSION ÉLECTROLUMINESCENTE, ET DOCUMENT D'IDENTITÉ, DE VALEUR OU DE SÉCURITÉ COMPRENANT UN SUBSTRAT DE CE TYPE

(30) Priorität: 30.07.2020 DE 102020120193
(43) Veröffentlichungstag der Anmeldung: 10.05.2023
(73) Patentinhaber: Bundesdruckerei GmbH, 10969 Berlin (DE)
(72) Erfinder: PETERS, Florian, 10437 Berlin (DE); DEICHSEL, Andreas, 13503 Berlin (DE)
(74) Vertreter: Hentrich Patent- & Rechtsanwaltspartnerschaft mbB
(86) Internationale Anmeldenummer: PCT/EP2021/069784
(87) Internationale Veröffentlichungsnummer: WO 2022/023055

(56) Entgegenhaltungen:
- EP-A1- 1 842 665
- EP-A1- 1 842 665
- WO-A2-98/39163
- WO-A2-98/39163
- DE-A1- 10 326 644
- DE-A1- 10 326 644

## Beschreibung

Die Erfindung betrifft ein Verfahren zum Bedrucken eines Substrats eines Ausweis-, Wert- oder Sicherheitsdokuments. Die Erfindung betrifft außerdem ein Ausweis-, Wert- oder Sicherheitsdokument sowie eine Intaglio-Druckvorrichtung zur Durchführung des Verfahrens.

Ausweis-, Wert- oder Sicherheitsdokumente, dienen dazu, die Identität einer Person oder Sache oder einen Anspruch, beispielsweise auf Zahlung eines Geldbetrages oder auf Herausgabe eines Produktes oder Erbringung einer Dienstleistung, zu verifizieren. Das Dokument kann als eine Banknote gebildet sein. Hierzu ist sicherzustellen, dass das Dokument nicht oder nur mit erheblichem Aufwand imitiert, gefälscht oder verfälscht werden kann. Das Dokument enthält daher häufig Sicherheitsmerkmale, deren Nachahmung äußerst schwierig oder sogar praktisch unmöglich ist. Beispielsweise besteht das Dokument, bspw. die Banknote, aus einem nicht ohne weiteres verfügbaren Material. Zusätzlich oder alternativ können Sicherheitsmerkmale oder Aufdrucke mit speziellen Farben, beispielsweise mit lumineszierenden oder optisch variablen Farben, optischen Elemente, wie Kippbilder, Kinegramme, Linsen- oder Prismenarrays, ferner Guillochen, Melierfasern, Sicherheitsfäden und andersartig gebildet sein.

Obwohl viele zur Anwendung kommende Sicherheitsmerkmale existieren, sind noch immer viele Fälschungen von Ausweis-, Wert- oder Sicherheitsdokumenten erfolgreich.

Um eine Fälschung eines Dokuments, insbesondere einer Banknote, zu erschweren, ist es bekannt, die Ausweis-, Wert- oder Sicherheitsdokumente mit einer Druckfarbe zu bedrucken, die in einem Intaglio-Druckverfahren als spezielle Form des Tiefdrucks auf das Substrat des Ausweis-, Wert- oder Sicherheitsdokuments aufgebracht wird. Hierbei lassen sich sehr feine Druckmuster generieren, die nach dem Trocknen eine leicht erhabene Haptik besitzen, also über das Substrat selbst hervorstehen.

Aus der DE 103 26 644 A1 ist es zudem bekannt, dass Ausweis-, Wert- oder Sicherheitsdokumente mit einer elektrolumineszenten Druckfarbe ausgestattet werden können, zum Beispiel durch Bedrucken. Die in dieser Druckfarbe enthaltenen elektrolumineszierenden Pigmente werden beim Anlegen eines elektrischen Wechselfelds angeregt und lumineszieren, wobei die Strahlung mittels eines geeigneten Prüfgeräts wieder erfasst werden kann. Typischerweise wird die elektrolumineszente Druckfarbe im Siebdruckverfahren auf ein Substrat aufgebracht. Die DE 103 26 644 A1 erwähnt zudem die Möglichkeit, die elektrolumineszente Druckfarbe im Stichtiefdruckverfahren aufzubringen, wobei sich in der Praxis herausgestellt hat, dass nur selten und eher zufällig eine Anregung der elektrolumineszenten Druckfarbe nach dem Bedrucken möglich war.

Auch in der WO 98 / 39163 A1 wird ein Wert- oder Sicherheitserzeugnis mit lumineszierenden Sicherheitselementen beschrieben.

Eine Druckvorrichtung mit einem Intaglio-Druckzylinder zum Drucken von Ausweis-, Wert- oder Sicherheitsdokumenten mit elektrolumineszenter Druckfarbe ist beispielsweise aus der EP 1 842 665 A1 bekannt.

Es ist daher die Aufgabe der vorliegenden Erfindung, ein Verfahren und eine Vorrichtung zum Bedrucken anzugeben, die dem vorstehend erwähnten Nachteil Rechnung tragen und zu einer zuverlässig reproduzierbaren Lumineszenz führen. Ferner ist es Aufgabe der vorliegenden Erfindung, ein entsprechend hergestelltes Ausweis-, Wert- oder Sicherheitsdokument anzugeben.

Diese Aufgabe wird gelöst durch ein Verfahren mit den Merkmalen des Anspruchs 1, durch ein Ausweis-, Wert- oder Sicherheitsdokument mit den Merkmalen des Anspruchs 14 sowie durch eine Vorrichtung mit den Merkmalen des Anspruchs 15. Vorteilhafte Ausgestaltungen mit zweckmäßigen Weiterbildungen der Erfindung sind in den abhängigen Ansprüchen angegeben.

Das Verfahren zum Bedrucken eines Substrats eines Ausweis-, Wert- oder Sicherheitsdokuments mit einer elektrolumineszenten Druckfarbe, umfasst die folgenden Schritte:
- Bereitstellen eines Intaglio-Druckwerks mit einem in einer Rotationsrichtung rotierend antreibbaren Intaglio-Druckzylinder, welcher eine Oberfläche aufweist, in die eine Mehrzahl an Vertiefungen zur zeitweisen Speicherung von Druckfarbe eingebracht ist, und mit einem mit der Oberfläche des Intaglio-Druckzylinders wechselwirkenden Wischzylinder,
- Aufbringen der Druckfarbe auf die Oberfläche und in die Vertiefungen des Intaglio-Druckzylinders,
- Wischen der Oberfläche des rotierenden Intaglio-Druckzylinders durch die Bewegung des Wischzylinders in einer von der Rotationsrichtung des Intaglio-Druckzylinders abweichenden Richtung, und
- Aufbringen des Substrats auf den Intaglio-Druckzylinder und Übertragen der in die Vertiefungen eingebrachten elektrolumineszenten Druckfarbe auf das Substrat.

Durch die unterschiedlichen Richtungen für den Druck der elektrolumineszenten Druckfarbe (Tinte) auf das Substrat und für das Wischen der Oberfläche des Intaglio-Druckzylinders wird gewährleistet, dass die auf das Substrat aufgebrachte Druckfarbe bei nachfolgender Anregung mit einem elektrischen Wechselfeld tatsächlich den gewünschten Lumineszenzeffekt zeigt. Die unterschiedlichen Richtungen des Abwischens der Oberfläche des Intaglio-Druckzylinders und der Richtung für den Druck selbst führt zu reproduzierbaren Intensitäten des Lum ineszenzeffekts.

Um den Lumineszenzeffekt verstärken zu können, d.h. um eine verbesserte Anregung der elektrolumineszenten Druckfarbe zu ermöglichen, ist es von Vorteil, dass die elektrolumineszente Druckfarbe aus elektrolumineszierenden Pigmenten und gegenüber diesen elektrisch isoliert angeordneten elektrisch leitfähigen Pigmenten gebildet ist. Letztere dienen der Feldverstärkung. Der Druckfarbe können auch Farbpigmente beigemengt sein, um sie auch im nicht-angeregten Zustand farblich kenntlich zu machen oder darzustellen.

Es ist von Vorteil, wenn in der elektrolumineszenten Druckfarbe das Verhältnis der Anzahl an elektrolumineszierenden Pigmenten zur Anzahl an elektrisch leitfähigen Pigmenten zwischen 0,2 und 0,7, vorzugsweise zwischen 0,25 und 0,6, am meisten bevorzugt zwischen 0,3 und 0,5, also das Verhältnis der Anzahl an elektrolumineszierenden Pigmenten zur Anzahl an elektrisch leitfähigen Pigmenten 1:5 bis 1:1,5, vorzugsweise 1:4 bis 1:1,7, am meisten bevorzugt 1:3 bis 1:2, ist. Beide Pigmentarten können in eine Matrix eingebettet sein, die eine gewünschte Verteilung der Pigmente erzwingt. Das auf diese Weise gebildete Verhältnis führt zu einer guter Intensität der Elektrolumineszenz der aufgedruckten Druckfarbe. Insbesondere das Verhältnis aus dem schmalsten Band von 0,3 und 0,5 führt dabei zu sehr guten, reproduzierbaren Ergebnissen unter elektrischer Anregung.

Die Intensität der Elektrolumineszenz wird auch dadurch begünstigt, dass das Verhältnis der mittleren Pigmentgröße der elektrolumineszierenden Pigmenten zur mittleren Pigmentgröße der elektrisch leitfähigen Pigmenten zwischen 0,4 und 1,0, vorzugsweise 0,5 und 0,9, insbesondere von 1:1,8 bis 1:1,2 beträgt. Die mittlere Pigmentgröße der elektrolumineszierenden Pigmente liegt dabei zwischen 3 µm - 25 µm, vorzugsweise 5 Mikrometern und 20 Mikrometern. Am meisten bevorzugt liegt sie zwischen 8 Mikrometern und 12 Mikrometern, da sich in diesem Bereich besonders gut reproduzierbare lumineszente Eigenschaften feststellen lassen.

Die Mehrzahl an Vertiefungen ist vorzugsweise aus parallel zueinander verlaufenden Linien gebildet, die eine Linienbreite von zwischen dem 10-fachen und dem 50-fachen der mittleren Pigmentgröße der elektrolumineszierenden Pigmenten der Druckfarbe aufweist, vorzugsweise zwischen dem 25-fachen bis 40-fachen. Auf diese Weise ist gewährleistet, dass die elektrolumineszierenden Pigmente in die Vertiefungen zuverlässig eindringen können, bevor sie auf das Substrat übertragen werden. Durch die in einer anderen Richtung ausgerichteten Wischbewegung werden die elektrolumineszierenden Pigmente und die Verstärkerpigmente in die Vertiefungen "gedrungen" eingebracht, was den späteren Lumineszenzeffekt zusätzlich begünstigt. Der Abstand zwischen den Linienvertiefungen ist proportional zur Intensität der Farbe auf dem Substrat sowie der Leuchtkraft. Es wird also zugunsten der Auflösung des gedruckten Bilds ein geringerer oder feinerer Abstand zwischen den Linien gewählt werden.

Die Vertiefungen können beispielsweise mit einer Ätzradierung in die Oberfläche des Intaglio-Druckzylinders eingebracht sein. Alternativ oder ergänzend können die Vertiefungen eingraviert sein. Die Linienstärke oder Linienbreite beträgt mindestens 120 Mikrometer, vorzugsweise 250 µm - 500 µm, am meisten bevorzugt 320- 410 µm. Besonders gute und reproduzierbare Ergebnisse ließen sich mit Linienstärken von zwischen 320 Mikrometern und 410 Mikrometern erzielen.

Die Mehrzahl an Vertiefungen weisen vorzugsweise eine radial bezüglich einer Rotationsachse des Intaglio-Druckzylinders ausgerichtete Tiefe von zwischen dem 4-fachen und dem 8-fachen der mittleren Pigmentgröße der elektrolumineszierenden Pigmente auf, womit gewährleistet ist, dass eine ausreichende Anzahl an lumineszierenden Partikeln in die Vertiefungen aufgenommen wird, bevor diese auf das Substrat übertragen wird. Die Tiefe beträgt ungefähr zwischen 40 Mikrometern und 70 Mikrometern.

Vorzugsweise wischt der Wischzylinder die Oberfläche in einer der Rotationsrichtung des Intaglio-Druckzylinders entgegengesetzten Rotationsrichtung. Auf diese Weise werden die Pigmente zuverlässig in die Vertiefungen "gedrungen" eingebracht.

Für die vereinfachte Anregbarkeit des bedruckten Substrats ist es sinnvoll, wenn sich die Mehrzahl der Vertiefungen parallel bezüglich einer Rotationsachse des Intaglio-Druckzylinders in der Oberfläche erstrecken, und wenn zur elektrolumineszenten Anregung auf das Substrat zwei flächig nebeneinanderliegende, einen Kondensator bildende Elektroden aufgelegt werden, die dabei senkrecht oder parallel bezüglich zu von den Vertiefungen bewirkten Drucklinien ausgerichtet sind.

Es ist auch möglich, dass das Substrat vor dem Bedrucken bereits zwei flächig nebeneinanderliegende, einen Kondensator bildende Elektroden umfasst, und dass das Substrat beim Bedrucken dann derart ausgerichtet ist, dass die Elektroden senkrecht oder parallel bezüglich der Rotationsachse des Intaglio-Druckzylinders ausgerichtet sind.

Die in Verbindung mit dem erfindungsgemäßen Verfahren genannten Vorteile und Wirkungen gelten auch für das erfindungsgemäßes Ausweis-, Wert- oder Sicherheitsdokument, das zumindest ein mit einer elektrolumineszierenden Druckfarbe bedrucktes Substrat oder einen Teil davon umfasst, welches mit dem erfindungsgemäßen Verfahren hergestellt wurde. Die elektrolumineszente Druckfarbe ist mit einem Intaglio-Druckzylinder aufgetragen, in dessen Oberfläche Vertiefungen eingebracht sind, die eine Linienstärke oder Linienbreite von mindestens 120 Mikrometer umfasst.

Die in Verbindung mit dem erfindungsgemäßen Verfahren genannten Vorteile und Wirkungen gelten außerdem auch für die erfindungsgemäße Intaglio-Druckvorrichtung.

Sie umfasst ein Intaglio-Druckwerk, das einen in einer Rotationsrichtung rotierend antreibbaren Intaglio-Druckzylinder umfasst, welcher eine Oberfläche aufweist, in die eine Mehrzahl an Vertiefungen zur zeitweisen Speicherung von Druckfarbe eingebracht ist, mit einem mit einer Oberfläche des Intaglio-Druckzylinders wechselwirkenden Wischzylinder, der eingerichtet ist, den Intaglio-Druckzylinder in einer von der Rotationsrichtung des Intaglio-Druckzylinders abweichenden Richtung zu wischen. Der Wischzylinder ist eingerichtet, die Oberfläche des Intaglio-Druckzylinders lateral zu reiben durch eine Bewegung des Wischzylinders in und entgegen einer Parallelen zur Rotationsachse des Intaglio-Druckzylinders.

Dem Druckwerk kann außerdem ein Farbreservoir zugeordnet sein, das eine Auslassöffnung umfasst, um die elektrolumineszente Druckfarbe auf die Oberfläche des Intaglio-Druckzylinders und in dessen Vertiefungen einzubringen. Zusätzlich kann eine Anpressrolle vorhanden sein, um das Substrat an die Oberfläche des Intaglio-Druckzylinders anzudrücken.

Das erfindungsgemäße Verfahren zum Bedrucken eines Substrats mit einer elektrolumineszenten Druckfarbe umfasst mehrere Schritte. Dabei ist die angegebene Reihenfolge der einzelnen Schritte nicht zwingend.

Weitere Merkmale, Eigenschaften und Vorteile der vorliegenden Erfindung werden im Folgenden anhand von Ausführungsvarianten unter Bezugnahme auf die beigefügten Figuren näher beschrieben. Alle bisher und im Folgenden beschriebenen Merkmale sind dabei sowohl einzeln als auch in einer beliebigen Kombination miteinander vorteilhaft. Die im Folgenden beschriebenen Ausführungsvarianten stellen lediglich Beispiele dar, welche den Gegenstand der Erfindung jedoch nicht beschränken. Dabei zeigen:
- Fig. 1: eine schematische Detailansicht einer Intaglio-Druckvorrichtung zum Aufdrucken einer elektrolumineszenten Druckfarbe auf ein Substrat einer Banknote in einer Intaglio-Drucktechnik,
- Fig. 2: ein teilweise mit Drucklinien der elektrolumineszenten Druckfarbe bedrucktes Substrat,
- Fig. 3: das bedruckte Substrat aus Figur 3 auf das ein Elektrodenpaar eines Anregungs- und/oder Messmittels aufgelegt ist, welches parallel bezüglich der Drucklinien ausgerichtet ist, und
- Fig. 4: das bedruckte Substrat aus Figur 3 auf das ein Elektrodenpaar eines Anregungs- und/oder Messmittels aufgelegt ist, welches senkrecht bezüglich der Drucklinien ausgerichtet ist.

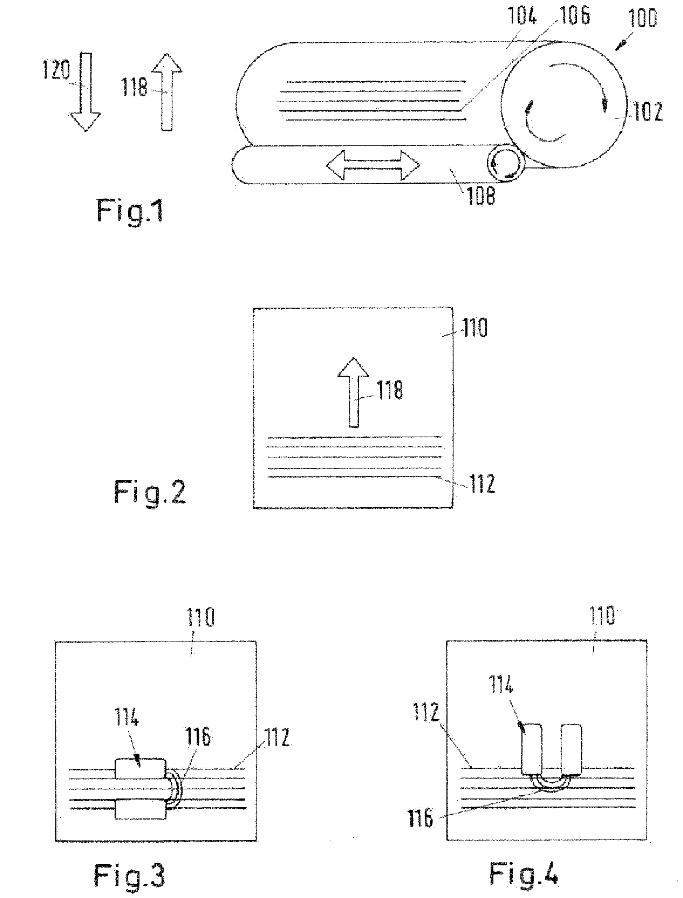

In Figur 1 ist schematisch eine Intaglio-Druckvorrichtung 100 gezeigt, die ein Intaglio-Druckwerk aufweist, das einen im Uhrzeigersinn rotierend antreibbaren Intaglio-Druckzylinder 102 umfasst, welcher eine Oberfläche 104 aufweist, in die eine Mehrzahl an Vertiefungen 106 zur zeitweisen Speicherung von Druckfarbe eingebracht ist. Das Intaglio-Druckwerk umfasst außerdem einen mit der Oberfläche 104 des Intaglio-Druckzylinders wechselwirkenden Wischzylinder 108, der eingerichtet ist, den Intaglio-Druckzylinder 102 im Gegen-Uhrzeigersinn zu wischen. Ergänzend ist der Wischzylinder 108 eingerichtet, die Oberfläche 104 des Intaglio-Druckzylinders 102 lateral zu reiben durch eine Bewegung des Wischzylinders 108 in und entgegen einer Parallelen zur Rotationsachse des Intaglio-Druckzylinders 102. Die Druckrichtung 118 und die Wischrichtung 120 sind durch Pfeile illustriert.

Der Übersicht halber wurden die weiteren Konstituenten des Intaglio-Druckwerks weggelassen. Dem Druckwerk ist aber außerdem ein Farbreservoir zugeordnet, das eine Auslassöffnung umfasst, um eine elektrolumineszente Druckfarbe auf die Oberfläche 104 des Intaglio-Druckzylinders 102 und in dessen Vertiefungen 106 einzubringen. Zusätzlich ist eine Anpressrolle vorhanden, um ein zu bedruckendes Substrat 110 an die Oberfläche 104 des Intaglio-Druckzylinders 102 anzudrücken damit die Druckfarbe auf das Substrat 110 aufgebracht beziehungsweise von diesem aufgenommen wird.

Die elektrolumineszente Druckfarbe umfasst elektrolumineszierenden Pigmente und gegenüber diesen elektrisch isoliert angeordnete elektrisch leitfähige Pigmente. Zusätzlich können aber Farbpigmente vorhanden sein, um das Druckergebnis auch ohne eine Anregung durch ein elektrisches Feld sehen oder optisch erfassen zu können.

Das Verhältnis in der elektrolumineszenten Druckfarbe aus der Anzahl an elektrolumineszierenden Pigmenten bezüglich der Anzahl an elektrisch leitfähigen Pigmenten beträgt vorliegend zwischen 0,2 und 0,7, vorzugsweise zwischen 0,25 und 0,6, am meisten bevorzugt zwischen 0,3 und 0,5. Das Verhältnis der mittleren Pigmentgröße der elektrolumineszierenden Pigmenten zur mittleren Pigmentgröße der elektrisch leitfähigen Pigmenten beträgt zwischen 0,4 und 1,0, vorzugsweise zwischen 0,5 und 0,9, wobei die mittlere Pigmentgröße der elektrolumineszierenden Pigmenten zwischen 3 Mikrometern und 25 Mikrometern, vorzugsweise zwischen 5 Mikrometern und 20 Mikrometern, am meisten bevorzugt zwischen 8 Mikrometern und 12 Mikrometern beträgt, da sich in diesen Bereichen besonders gut reproduzierbare Lumineszenzeigenschaften der durch die Vertiefungen 106 bewirkten Drucklinien 112 feststellen lassen.

Die Mehrzahl an Vertiefungen 106 im Intaglio-Druckzylinder 102 ist aus parallel zueinander verlaufenden Linien gebildet, die eine Linienbreite von zwischen dem 10-fachen und dem 50-fachen der mittleren Pigmentgröße der elektrolumineszierenden Pigmenten der Druckfarbe aufweist, vorzugsweise zwischen dem 25-fachen bis 40-fachen. Die Mehrzahl an Vertiefungen 106 weist außerdem eine radial bezüglich einer Rotationsachse des Intaglio-Druckzylinders 102 ausgerichtete Tiefe von zwischen dem 4-fachen und dem 8-fachen der mittleren Pigmentgröße der elektrolumineszierenden Pigmente auf.

In Figur 2 sind diese parallel zueinander ausgerichteten Drucklinien 112 auf dem bedruckten Substrat 110 zu erkennen, wobei durch den Pfeil die Druckrichtung 118 nochmals angedeutet ist.

Nach dem Drucken der Drucklinien 112 im Intaglio-Druckverfahren kann zur Prüfung oder zur Anregung der elektrolumineszenten Druckfarbe ein Elektrodenpaar 114 auf das Substrat 110 aufgelegt bzw. extern ausgerichtet werden, welches in Figur 3 derart ausgerichtet ist, dass seine im Wesentlichen rechteckig geformten Elektroden sich parallel bezüglich der Drucklinien 112 erstrecken. Die dadurch entstehenden halbbogenförmigen Feldlinien 114 sind ebenfalls gezeigt. In Figur 4 ist eine Verbesserung gezeigt, wobei das Elektrodenpaar 114 gegenüber den Drucklinien 112 derart ausgerichtet ist, dass seine im Wesentlichen rechteckig geformten Elektroden sich senkrecht bezüglich der Drucklinien 112 erstrecken.

Insgesamt wird durch das in Figuren 3 und 4 gezeigte Design darauf geachtet, dass die Feldlinien 114 optimal in einer Richtung der durch die Vertiefungen 106 bewirkten Drucklinien 112 verlaufen. Dies kann durch ein geschickt gewähltes Design der Elektroden bei einem weniger geraden Design des elektrolumineszenten Druckes selbst erfolgen. Die Drucklinien 112 sollten dabei am Substrat 110 dort vorliegen, wo eine spätere Prüfung mit einem Sensor erfolgt, denn dann wird die höchste "Ausbeute" an Elektrolumineszenz zu verzeichnen sein. Eine Zentrierung des Substrats 110 innerhalb des Prüfgeräts kann hierfür günstig sein. Ein Feld mit parallelen Drucklinien 112 kann beispielsweise dort vorliegen, wo eine Sortiermaschine zwischen den Beförderungsbändern offenen Raum für eine durch die Elektrolumineszenz bewirkte Lichtausstrahlung zulässt.

Im Ergebnis ist es mit der vorliegenden Erfindung nun möglich, zuverlässige und reproduzierbare Ergebnisse von elektrolumineszenten Drucken zu erhalten, die im Intaglio-Druckverfahren aufgebracht wurden.

### BEZUGSZEICHENLISTE

- 100: Intaglio-Druckvorrichtung
- 102: Intaglio-Druckzylinder
- 104: Oberfläche
- 106: Vertiefungen
- 108: Wischzylinder
- 110: Substrat
- 112: Drucklinie
- 114: Elektrodenpaar (Kondensator)
- 116: Feldlinien
- 118: Druckrichtung
- 120: Wischrichtung

## Patentansprüche

1. Verfahren zum Bedrucken eines Substrats (110) eines Ausweis-, Wert- oder Sicherheitsdokuments mit einer elektrolumineszenten Druckfarbe, umfassend die Schritte:
- Bereitstellen eines Intaglio-Druckwerks mit einem in einer Rotationsrichtung (118) rotierend antreibbaren Intaglio-Druckzylinder (102), welcher eine Oberfläche (104) aufweist, in die eine Mehrzahl an Vertiefungen (106) zur zeitweisen Speicherung von Druckfarbe eingebracht ist, und mit einem mit der Oberfläche (104) des Intaglio-Druckzylinders (102) wechselwirkenden Wischzylinder (108),
- Aufbringen der Druckfarbe auf die Oberfläche (104) und in die Vertiefungen (106) des Intaglio-Druckzylinders (102),
- Wischen der Oberfläche (104) des rotierenden Intaglio-Druckzylinders (102) durch die Bewegung des Wischzylinders (108) in einer von der Rotationsrichtung (118) des Intaglio-Druckzylinders (102) abweichenden Richtung (120), und
- Aufbringen des Substrats (110) auf den Intaglio-Druckzylinder (102) und Übertragen der in die Vertiefungen (106) eingebrachten elektrolumineszenten Druckfarbe auf das Substrat (110).

2. Verfahren nach Anspruch 1, **dadurch gekennzeichnet, dass** die elektrolumineszente Druckfarbe aus elektrolumineszierenden Pigmenten und gegenüber diesen elektrisch isoliert angeordneten elektrisch leitfähigen Pigmenten gebildet ist.

3. Verfahren nach Anspruch 2, **dadurch gekennzeichnet, dass** in der elektrolumineszenten Druckfarbe das Verhältnis der Anzahl an elektrolumineszierenden Pigmenten zur Anzahl an elektrisch leitfähigen Pigmenten zwischen 0,2 und 0,7 beträgt.

4. Verfahren nach Anspruch 2 oder 3, **dadurch gekennzeichnet, dass** in der elektrolumineszenten Druckfarbe das Verhältnis der Anzahl an elektrolumineszierenden Pigmenten zur Anzahl an elektrisch leitfähigen Pigmenten zwischen 0,25 und 0,6 beträgt.

5. Verfahren nach einem der Ansprüche 2 bis 4, **dadurch gekennzeichnet, dass** in der elektrolumineszenten Druckfarbe das Verhältnis der Anzahl an elektrolumineszierenden Pigmenten zur Anzahl an elektrisch leitfähigen Pigmenten zwischen 0,3 und 0,5 beträgt.

6. Verfahren nach einem der Ansprüche 2 bis 5, **dadurch gekennzeichnet, dass** das Verhältnis der mittleren Pigmentgröße der elektrolumineszierenden Pigmenten zur mittleren Pigmentgröße der elektrisch leitfähigen Pigmenten zwischen 0,4 und 1,0 beträgt.

7. Verfahren nach einem der Ansprüche 2 bis 6, **dadurch gekennzeichnet, dass** das Verhältnis der mittleren Pigmentgröße der elektrolumineszierenden Pigmenten zur mittleren Pigmentgröße der elektrisch leitfähigen Pigmenten zwischen 0,5 und 0,9 beträgt.

8. Verfahren nach einem der Ansprüche 2 bis 7, **dadurch gekennzeichnet, dass** die mittlere Pigmentgröße der elektrolumineszenten Pigmente zwischen 3 Mikrometern und 25 Mikrometern liegt.

9. Verfahren nach einem der Ansprüche 2 bis 8, **dadurch gekennzeichnet, dass** die Mehrzahl an Vertiefungen (106) aus parallel zueinander verlaufenden Linien gebildet ist, die eine Linienbreite von zwischen dem 10-fachen und dem 50-fachen der mittleren Pigmentgröße der elektrolumineszierenden Pigmenten der Druckfarbe aufweist.

10. Verfahren nach einem der Ansprüche 2 bis 9, **dadurch gekennzeichnet, dass** die Mehrzahl an Vertiefungen (106) aus parallel zueinander verlaufenden Linien gebildet ist, die eine Linienbreite von zwischen dem 25-fachen und dem 40-fachen der mittleren Pigmentgröße der elektrolumineszierenden Pigmenten der Druckfarbe aufweist.

11. Verfahren nach Anspruch 9 oder 10, **dadurch gekennzeichnet, dass** die Mehrzahl an Vertiefungen (106) eine radial bezüglich einer Rotationsachse des Intaglio-Druckzylinders (102) ausgerichtete Tiefe von zwischen dem 4-fachen und dem 8-fachen der mittleren Pigmentgröße der elektrolumineszierenden Pigmente aufweist.

12. Verfahren nach einem der Ansprüche 1 bis 11, **dadurch gekennzeichnet, dass** der Wischzylinder (108) die Oberfläche (104) in einer der Rotationsrichtung (118) des Intaglio-Druckzylinders (102) entgegengesetzten Rotationsrichtung (120) wischt.

13. Verfahren nach einem der Ansprüche 1 bis 12, **dadurch gekennzeichnet, dass** sich die Mehrzahl der Vertiefungen (106) parallel bezüglich einer Rotationsachse des Intaglio-Druckzylinders (102) in der Oberfläche (104) erstrecken, und dass zur elektrolumineszenten Anregung der auf das Substrat (110) aufgebrachten Druckfarbe zwei flächig nebeneinanderliegende, einen Kondensator bildende Elektroden aufgelegt werden, die senkrecht oder parallel bezüglich zu von den Vertiefungen (106) bewirkten Drucklinien (112) ausgerichtet sind.

14. Ausweis-, Wert- oder Sicherheitsdokument, umfassend ein mit einer elektrolumineszierenden Druckfarbe bedrucktes Substrat (110), hergestellt nach dem Verfahren nach einem der Ansprüche 1 bis 13,
wobei die elektrolumineszente Druckfarbe mit einem Intaglio-Druckzylinder (102) aufgetragen ist, in dessen Oberfläche (104) Vertiefungen eingebracht sind, die eine Linienstärke oder Linienbreite von mindestens 120 Mikrometer umfasst.

15. Intaglio-Druckvorrichtung (100) zur Durchführung des Verfahrens nach einem der Ansprüche 1 bis 13, mit einem Intaglio-Druckwerk, das einen in einer Rotationsrichtung (118) rotierend antreibbaren Intaglio-Druckzylinder (102) umfasst, welcher eine Oberfläche (104) aufweist, in die eine Mehrzahl an Vertiefungen (106) zur zeitweisen Speicherung von Druckfarbe eingebracht ist, mit einem mit der Oberfläche (104) des Intaglio-Druckzylinders (102) wechselwirkenden Wischzylinder (108), der eingerichtet ist, den Intaglio-Druckzylinder (102) entgegen der Rotationsrichtung (118) des Intaglio-Druckzylinders (102) zu wischen, **dadurch gekennzeichnet, dass** der Wischzylinder (108) eingerichtet ist, die Oberfläche (104) des Intaglio-Druckzylinders (102) lateral zu reiben durch eine Bewegung des Wischzylinders (108) in und entgegen einer Parallelen zur Rotationsachse des Intaglio-Druckzylinders (102).

## Claims

1. A method of printing an electroluminescent ink on a substrate (110) of an identification, value or security document, comprising the steps of:
- providing of an intaglio printing unit having an intaglio printing cylinder (102) which can be rotatably driven in a direction of rotation (118) and has a surface (104) in which a plurality of indentations (106) for temporarily storing of printing ink are formed, and having a wiper cylinder (108) interacting with the surface (104) of the intaglio printing cylinder (102),
- applying the printing ink to the surface (104) and into the indentations (106) of the intaglio printing cylinder (102),
- wiping the surface (104) of the rotating intaglio printing cylinder (102) by moving the wiper cylinder (108) in a direction (120) other than the direction of rotation (118) of the intaglio printing cylinder (102), and
- applying the substrate (110) to the intaglio printing cylinder (102) and transferring the electroluminescent ink introduced into the indentations (106) to the substrate (110).

2. The method according to claim 1, **characterized in that** the electroluminescent printing ink is formed from electroluminescent pigments and electrically conductive pigments arranged electrically insulated from these.

3. The method according to claim 2, **characterized in that** in the electroluminescent printing ink the ratio of the number of electroluminescent pigments to the number of electrically conductive pigments is between 0.2 and 0.7.

4. The method according to claim 2 or 3, **characterized in that** in the electroluminescent printing ink the ratio of the number of electroluminescent pigments to the number of electrically conductive pigments is between 0.25 and 0.6.

5. The method according to any one of claims 2 to 4, **characterized in that** in the electroluminescent printing ink the ratio of the number of electroluminescent pigments to the number of electrically conductive pigments is between 0.3 and 0.5.

6. The method according to any one of claims 2 to 5, **characterized in that** the ratio of the mean pigment size of the electroluminescent pigments to the mean pigment size of the electrically conductive pigments is between 0.4 and 1.0.

7. The method according to any one of claims 2 to 6, **characterized in that** the ratio of the mean pigment size of the electroluminescent pigments to the mean pigment size of the electrically conductive pigments is between 0.5 and 0.9.

8. The method according to any one of claims 2 to 7, **characterized in that** the mean pigment size of the electroluminescent pigments is between 3 micrometres and 25 micrometres.

9. The method according to any one of claims 2 to 8, **characterized in that** the plurality of indentations (106) is formed from lines running parallel to each other and having a line width of between 10 times and 50 times the mean pigment size of the electroluminescent pigments of the printing ink.

10. The method according to any one of claims 2 to 9, **characterized in that** the plurality of indentations (106) is formed from lines running parallel to each other and having a line width of between 25 times and 40 times the mean pigment size of the electroluminescent pigments of the printing ink.

11. The method according to claim 9 or 10, **characterized in that** the plurality of indentations (106) has a depth radially aligned with respect to an axis of rotation of the intaglio printing cylinder (102) of between 4 times and 8 times the mean pigment size of the electroluminescent pigments.

12. The method according to any one of claims 1 to 11, **characterized in that** the wiper cylinder (108) wipes the surface (104) in a direction of rotation (120) opposite to the direction of rotation (118) of the intaglio printing cylinder (102).

13. The method according to one of claims 1 to 12, **characterized in that** the plurality of indentations (106) extend parallel with respect to an axis of rotation of the intaglio printing cylinder (102) in the surface (104), and **in that**, for electroluminescent excitation of the printing ink applied to the substrate (110), two electrodes forming a capacitor and lying flat next to one another are applied, which electrodes are aligned perpendicularly or parallel with respect to printing lines (112) caused by the indentations (106).

14. An identification, value or security document comprising a printed substrate (110) with an electroluminescent printing ink, produced by the method according to any one of claims 1 to 13,
wherein the electroluminescent printing ink is applied with an intaglio printing cylinder (102), in the surface (104) of which indentations are made comprising a line thickness or line width of at least 120 micrometers.

15. An intaglio printing press (100) for carrying out the method according to one of claims 1 to 13, having an intaglio printing unit which comprises an intaglio printing cylinder (102) which can be rotatably driven in a direction of rotation (118) and has a surface (104) in which a plurality of indentations (106) for the temporary storage of printing ink are introduced, having a wiper cylinder (108) which interacts with the surface (104) of the intaglio printing cylinder (102), which is arranged to wipe the intaglio printing cylinder (102) against the direction of rotation (118) of the intaglio printing cylinder (102), **characterized in that** the wiper cylinder (108) is arranged to rub the surface (104) of the intaglio printing cylinder (102) laterally by a movement of the wiper cylinder (108) in and against a direction parallel to the axis of rotation of the intaglio printing cylinder (102).

## Revendications

1. Procédé d'impression d'un substrat (110) d'un document d'identité, de valeur ou de sécurité avec une encre d'impression électroluminescente, comprenant les étapes consistant à :
- mettre à disposition un dispositif d'impression en taille-douce avec un cylindre d'impression en taille-douce (102) pouvant être entraîné en rotation dans une direction de rotation (118), lequel cylindre présente une surface (104) dans laquelle une pluralité de creux (106) est pratiquée pour le stockage temporaire d'encre d'impression, et avec un cylindre d'essuyage (108) interagissant avec la surface (104) du cylindre d'impression en taille-douce (102),
- appliquer l'encre d'impression sur la surface (104) et dans les creux (106) du cylindre d'impression en taille-douce (102),
- essuyer la surface (104) du cylindre d'impression en taille-douce rotatif (102) en déplaçant le mouvement du cylindre d'essuyage (108) dans une direction (120) différente de la direction de rotation (118) du cylindre d'impression en taille-douce (102), et
- appliquer le substrat (110) sur le cylindre d'impression en taille-douce (102) et transférer l'encre d'impression électroluminescente introduite dans les creux (106) sur le substrat (110).

2. Procédé selon la revendication 1 **caractérisé en ce que** l'encre d'impression électroluminescente est formée de pigments électroluminescents et de pigments électroconducteurs disposés de manière électriquement isolée par rapport à ceux-ci.

3. Procédé selon la revendication 2, **caractérisé en ce que** le rapport entre le nombre de pigments électroluminescents et le nombre de pigments électroconducteurs dans l'encre d'impression électroluminescente est entre 0,2 et 0,7.

4. Procédé selon la revendication 2 ou 3, **caractérisé en ce que** le rapport entre le nombre de pigments électroluminescents et le nombre de pigments électroconducteurs dans l'encre d'impression électroluminescente est entre 0,25 et 0,6.

5. Procédé selon l'une quelconque des revendications 2 à 4, **caractérisé en ce que** le rapport entre le nombre de pigments électroluminescents et le nombre de pigments électroconducteurs dans l'encre d'impression électroluminescente est entre 0,3 et 0,5.

6. Procédé selon l'une quelconque des revendications 2 à 5, **caractérisé en ce que** le rapport entre la taille de pigment moyenne des pigments électroluminescents et la taille de pigment moyenne des pigments électroconducteurs est entre 0,4 et 1,0.

7. Procédé selon l'une quelconque des revendications 2 à 6, **caractérisé en ce que** le rapport entre la taille de pigment moyenne des pigments électroluminescents et la taille de pigment moyenne des pigments électroconducteurs est entre 0,5 et 0,9.

8. Procédé selon l'une quelconque des revendications 2 à 7, **caractérisé en ce que** la taille de pigment moyenne des pigments électroluminescents est entre 3 micromètres et 25 micromètres.

9. Procédé selon l'une quelconque des revendications 2 à 8, **caractérisé en ce que** la pluralité de creux (106) est formée de lignes s'étendant parallèlement les unes aux autres, qui présente une largeur de ligne entre 10 et 50 fois la taille de pigment moyenne des pigments électroluminescents de l'encre d'impression.

10. Procédé selon l'une quelconque des revendications 2 à 9, **caractérisé en ce que** la pluralité de creux (106) est formée de lignes s'étendant parallèlement les unes aux autres, qui présente une largeur de ligne entre 25 et 40 fois la taille de pigment moyenne des pigments électroluminescents de l'encre d'impression.

11. Procédé selon la revendication 9 ou 10, **caractérisé en ce que** la pluralité de creux (106) présente une profondeur orientée radialement par rapport à un axe de rotation du cylindre d'impression en taille-douce (102) entre 4 et 8 fois la taille de pigment moyenne des pigments électroluminescents.

12. Procédé selon l'une quelconque des revendications 1 à 11, **caractérisé en ce que** le cylindre d'essuyage (108) essuie la surface (104) dans une direction de rotation (120) opposée à la direction de rotation (118) du cylindre d'impression en taille-douce (102).

13. Procédé selon l'une quelconque des revendications 1 à 12, **caractérisé en ce que** la pluralité de creux (106) s'étend parallèlement par rapport à un axe de rotation du cylindre d'impression en taille-douce (102) dans la surface (104), et **en ce que** pour l'excitation électroluminescente de l'encre d'impression appliquée sur le substrat (110), deux électrodes juxtaposées à plat sont appliquées, formant un condensateur, qui sont orientées perpendiculairement ou parallèlement par rapport aux lignes d'impression (112) provoquées par les creux (106).

14. Document d'identité, de valeur ou de sécurité comprenant un substrat (110) imprimé avec une encre d'impression électroluminescente, fabriqué selon le procédé selon l'une quelconque des revendications 1 à 13, dans lequel l'encre d'impression électroluminescente est appliquée avec un cylindre d'impression en taille-douce (102), dans la surface (104) duquel sont pratiqués des creux qui comprend une épaisseur de ligne ou une largeur de ligne d'au moins 120 micromètres.

15. Dispositif d'impression en taille-douce (100) pour la mise en oeuvre du procédé selon l'une quelconque des revendications 1 à 13, avec un dispositif d'impression en taille-douce qui comprend un cylindre d'impression en taille-douce (102) pouvant être entraîné en rotation dans une direction de rotation (118), lequel cylindre présente une surface (104) dans laquelle une pluralité de creux (106) est pratiquée pour le stockage temporaire d'encre d'impression, avec un cylindre d'essuyage (108) interagissant avec la surface (104) du cylindre d'impression en taille-douce (102) qui est configuré pour essuyer le cylindre d'impression en taille-douce (102) en sens inverse de la direction de rotation (118) du cylindre d'impression en taille-douce (102), **caractérisé en ce que** le cylindre d'essuyage (108) est configuré pour frotter latéralement contre la surface (104) du cylindre d'impression en taille-douce (102) en déplaçant le cylindre d'essuyage (108) dans et en sens inverse d'une parallèle à l'axe de rotation du cylindre d'impression en taille-douce (102).
